# EUROPEAN PATENT SPECIFICATION

(11) **EP 2 346 290 B1**
(45) Date of publication and mention of the grant of the patent: **04.05.2016**
(21) Application number: 09824427.0
(22) Date of filing: 06.11.2009
(51) Int. Cl.: H04W 56/00, H04B 7/02

(54) **METHOD, SYSTEM AND APPARATUS FOR TIMING ADJUSTMENT**
VERFAHREN, SYSTEM UND GERÄT ZUR ZEITGENAUEN ABSTIMMUNG
PROCÉDÉ, SYSTÈME ET APPAREIL DE RÉGLAGE D UNE BASE DE TEMPS

(30) Priority: 06.11.2008 CN 200810176042
(43) Date of publication of application: 20.07.2011
(73) Proprietor: Huawei Technologies Co., Ltd., Longgang District Shenzhen, Guangdong 518129 (CN)
(72) Inventor: WAN, Lei, Shenzhen Guangdong 518129 (CN); ZHOU, Mingyu, Shenzhen Guangdong 518129 (CN); MA, Sha, Shenzhen Guangdong 518129 (CN); REN, Xiaotao, Shenzhen Guangdong 518129 (CN); XIA, Yuan, Shenzhen Guangdong 518129 (CN); SUN, Jingyuan, Shenzhen Guangdong 518129 (CN); ZHAO, Yajun, Shenzhen Guangdong 518129 (CN)
(74) Representative: Thun, Clemens
(86) International application number: PCT/CN2009/074849
(87) International publication number: WO 2010/051772

(56) References cited:
- WO-A1-02/099997
- WO-A2-2008/024788
- CN-A- 1 411 302
- CN-A- 1 451 250
- US-A1- 2006 153 147
- PARKVALL S ET AL: "LTE-Advanced - Evolving LTE towards IMT-Advanced", VEHICULAR TECHNOLOGY CONFERENCE, 2008. VTC 2008-FALL. IEEE 68TH, IEEE, PISCATAWAY, NJ, USA, 21 September 2008 (2008-09-21), pages 1-5, XP031352496, ISBN: 978-1-4244-1721-6

## Description

### FIELD OF THE INVENTION

The present invention relates to network communications technologies, and in particular, to a method, a system, and an apparatus for adjusting timing.

### BACKGROUND OF THE INVENTION

In a radio communication system, Coordinated Multi-Point transmission or reception (CoMP) is a technology for improving overall performance of a cell and performance of cell-edge User Equipments (UEs). Downlink CoMP transmission means that multiple transmitters distributed in different locations send data to the UE jointly, and uplink CoMP reception means that multiple receivers distributed in different locations receive data from the UE together and process the data jointly.

Network nodes in a CoMP system include: an evolved NodeB (eNodeB) and one or more Access Points (APs). An AP is a node that includes at least a radio frequency transceiver. Multiple APs are distributed geographically and connected to the eNodeB. In a CoMP system, multiple APs may coordinate to transmit or receive data from the UE. The coordinating APs may come from the same eNodeB or different eNodeBs. Generally, when multiple APs serve the UE, the UE selects an AP as an anchor AP for sending control information, and other APs are secondary APs for sending service information.

Generally, in the initial cell synchronization, the UE determines the AP with a strongest signal as an anchor AP of the UE according to the detected signal strength of the synchronization channel, and determines the downlink timing according to the synchronization channel of the anchor AP. Before sending the service information, the UE needs to initiate random access to get synchronized with the network in the uplink direction. At this time, the UE selects the uplink random access channel corresponding to the anchor AP to transmit service information. The anchor AP sends initial synchronization adjustment information to the UE according to the uplink synchronization requirement of the local cell to ensure uplink timing synchronization of the UE which uses this AP as an anchor AP.

In the prior art, the system generally tolerates a certain time spreading without deteriorating performance. For example, in an Orthogonal Frequency Division Multiplexing (OFDM) system, an OFDM symbol is generally preceded by a Cyclic Prefix (CP) overhead. The time spreading (multi-path) in a CP may be removed through simple processing on the receiver. That is, Inter-Symbol Interference (ISI) can be eliminated when the CP is greater than the time spreading.

In the prior art, when the coordination mode of the AP in service of the UE changes, the eNodeB or the UE determines whether it is necessary to provide CoMP transmission or reception for the UE according to an AP selection rule, and determines how many APs are required for providing the CoMP service. When the coordination mode changes, for example, when the CoMP service is provided by a single AP earlier but by multiple APs later, the following synchronization problems occur:
In the uplink direction, it is assumed that uplink timing synchronization is performed by the UEs which use the same AP as an anchor AP, and that all APs have the same uplink timing reference. The AP receives information from multiple UEs, including the UEs which use this AP as an anchor AP and the UEs which use this AP as a secondary AP.

In the uplink direction, the signals on the AP side are processed by the same receiver uniformly. When the arrival time spreading of strong signals from different UEs goes beyond the uplink CP, or strong signals from some UEs arrive ahead of the uplink timing reference, the CP is unable to eliminate inter-symbol crosstalk or inter-subcarrier interference caused by such signals, which deteriorates performance. Although the arrival time of strong signals of only a few UEs falls outside the CP (the signals arrive at the time before or after the CP) in emulation statistics, great inter-subcarrier interference is still caused by uniform uplink processing on the receiver, and the impact upon other UEs in the uplink direction is more serious than that in the downlink direction.

A solution to the uplink problems in the prior art is that: A longer uplink CP is set to eliminate inter-symbol crosstalk and inter-subcarrier interference in the uplink direction. This solution leads to a great system overhead and impairs the system capacity.

International patent application (WO 2008/024788 A2) titled "METHOD AND APPARATUS FOR RANDOM ACCESS IN AN ORTHOGONAL MULTIPLE-ACCESS COMMINICATION SYSTEM" discloses techniques for accessing a wireless communication system are described. A user equipment (UE) sends a random access preamble for system access. The random access preamble may include a random identifier (ID), a channel quality indicator (CQI), etc. The UE may receive a random access response comprising UL resoueces, timing advance, etc.

Publication titled "LTE-Advanced - Evolving LTE towards IMT-Advanced" (PARKVALL S ET AL, VEHICULAR TECHNOLOGY CONFERENCE, 2008. VTC 2008-FALL. IEEE 68TH, IEEE, PISCATAWAY, NJ, USA, 21 September 2008 (2008-09-21), pages 1-5, XP031352496, ISBN:978-1-4244-1721-6) discloses three different alternatives of coordinated multi-point transmission/reception (CoMP) technique.

### SUMMARY OF THE INVENTION

Embodiments of the present invention provide a method, a system, and an apparatus for adjusting timing, with a view to eliminating inter-symbol crosstalk and inter-subcarrier interference and avoiding a great system overhead.

A timing adjustment method provided in an embodiment of the present invention includes:
judging whether an AP in service of a UE changes; and
sending timing adjustment signaling to correct uplink timing of the UE if an AP in service of the UE changes, so as to enable the UE to adjust the timing;
wherein, the sending the timing adjustment signaling to correct the uplink timing of the UE comprises:
   obtaining uplink timing of an AP in service closest to the UE; and
   adjusting the uplink timing of the UE according to the uplink timing of the AP in service closest to the UE, and sending the timing adjustment signaling to the UE.

A timing adjustment system provided in an embodiment of the present invention includes:
a network-side device, configured to judge whether an AP in service of a UE changes, and send timing adjustment signaling to correct uplink timing of the UE if an AP in service of the UE changes, so as to enable the UE to adjust the timing; and
the UE, configured to receive the timing adjustment signaling sent by the network-side device, and adjust the uplink timing of the UE according to the timing adjustment signaling.

A network-side device provided in an embodiment of the present invention includes:
a judging unit, configured to judge whether an AP in service of a UE changes; and
a sending unit, configured to send timing adjustment signaling to correct uplink timing of the UE if the judging unit determines that an AP in service of the UE changes, so as to enable the UE to adjust the timing;
wherein, the sending unit comprises:
   a timing obtaining subunit, configured to obtain uplink timing of an AP in service closest to the UE;
   a timing adjusting subunit, configured to adjust the uplink timing of the UE according to the uplink timing obtained by the timing obtaining subunit; and
   a signaling sending subunit, configured to send the timing adjustment signaling to the UE.

A UE provided in an embodiment of the present invention includes:
a signaling receiving unit, configured to receive timing adjustment signaling sent by a network-side device; and
a timing adjusting unit, configured to adjust uplink timing of the UE according to the timing adjustment signaling received by the signaling receiving unit.

In the embodiments of the present invention, when an AP in service of the UE changes, the network-side device sends timing adjustment signaling to correct uplink timing of the UE, so as to enable the UE to adjust the timing, thereby shortening delay of the uplink signals received by APs in service. By still applying a short uplink CP, the system relieves inter-symbol crosstalk and inter-subcarrier interference, and therefore reduces the system overhead and improves the utilization of system capacity.

### BRIEF DESCRIPTION OF THE DRAWINGS

To describe the technical solution under the present invention more clearly, the following describes the accompanying drawings involved in the embodiments of the present invention. Apparently, the accompanying drawings outlined below are not exhaustive, and persons of ordinary skill in the art can derive other drawings from such accompanying drawings without any creative effort.
FIG. 1 is a flowchart of a timing adjustment method in an embodiment of the present invention;
FIG. 2 shows how to adjust timing of a UE according to timing of an AP in service closest to the UE in an embodiment of the present invention;
FIG. 3 is a flowchart of another timing adjustment method in an embodiment of the present invention;
FIG. 4 is a flowchart of another timing adjustment method in an embodiment of the present invention;
FIG. 5 shows a structure of a timing adjustment system in an embodiment of the present invention;
FIG. 6 shows a structure of a base station in an embodiment of the present invention;
FIG. 7 shows a structure of another base station in an embodiment of the present invention;
FIG. 8 shows a structure of a base station in an embodiment of the present invention;
FIG. 9 shows a structure of a UE in an embodiment of the present invention; and
FIG. 10 shows a structure of another UE in an embodiment of the present invention.

### DETAILED DESCRIPTION OF THE EMBODIMENTS

The following detailed description is provided with reference to the accompanying drawings to provide a thorough understanding of the present invention. Evidently, the drawings and the detailed description are merely part of embodiments of the present invention rather than all embodiments. All other embodiments, which can be derived by those skilled in the art from the embodiments provided herein without any creative effort, shall fall within the scope of the present invention.

The embodiments of the present invention provide a timing adjustment method. By using the method, the uplink timing of the UE whose AP in service changes is adjusted, so as to ensure performance of the UE and reduce the impact on other UEs in the system.

In the embodiments of the present invention, when the UE is in a single-point transmitting or receiving state, the uplink timing is adjusted in a general timing adjustment way, namely, adjusted by using the uplink timing of an AP in service for reference; when the coordination mode of the AP in service of the UE changes, the uplink timing is adjusted according to the uplink timing of the AP in service closest to this UE.

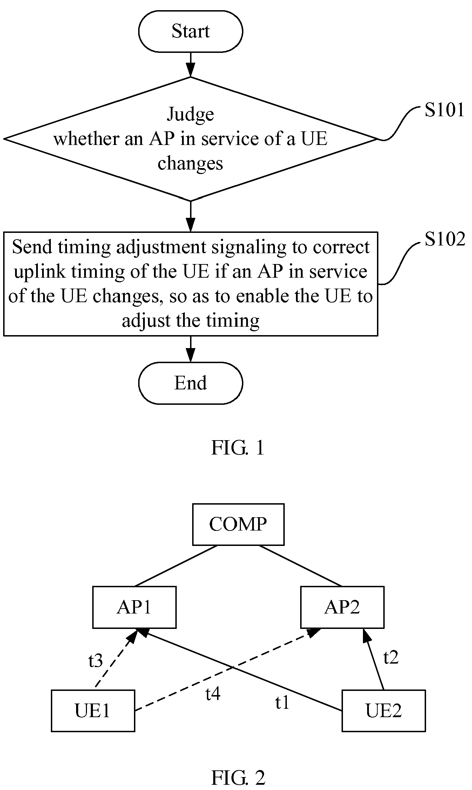

As shown in FIG. 1, a timing adjustment method in an embodiment of the present invention includes the following steps:
Step S101: Judge whether an AP in service of the UE changes.
Step S102: Send timing adjustment signaling to correct uplink timing of the UE if an AP in service of the UE changes, so as to enable the UE to adjust the timing.

When the UE is in a single-point transmitting or receiving state, the uplink timing of the UE is adjusted according to the uplink timing of an AP in service of the UE, namely, an anchor AP of the UE.

The change of an AP in service of the UE may be: The UE changes from the single-point transmitting or receiving state to the state of being served by APs in coordination mode. An AP in service of the UE changes accordingly, for example, the number of APs in service of the UE changes from one to many; or one or more of APs in service that provides coordination for the UE change, for example, at least one of the APs in service is deleted or a new AP is added.

Further, in step S102, base on the foregoing two scenarios, namely, that is, based on the change of an AP in service of the UE, the network-side device may check whether the change of the earliest time of arrival of a strong signal of the UE at each AP in service exceeds a preset threshold, and sends timing adjustment signaling to correct the uplink timing of the UE only if the change of the earliest time of arrival exceeds the preset threshold. In this way, the timing of the UE can be adjusted in time, and the delay of the uplink signal received by the APs in service is shortened. In addition, timing of the UE is not adjusted too frequently.

For example, multiple APs in service exist, and a strong signal of the UE arrives at the anchor AP first, but the anchor AP changes. The uplink timing of the UE is corrected only if the difference between the time of receiving the strong signal at the anchor AP before change and the time of receiving the strong signal at the anchor AP after change exceeds a preset threshold. The strong signal is a signal of specific strength. In practice, the strength of a UE signal received by an AP is set to be greater than or equal to a specific value. The meaning of a strong signal defined here applies the following descriptions.

In step S102, sending the timing adjustment signaling to correct the uplink timing of the UE may be: obtaining the uplink timing of the AP in service closest to the UE, adjusting the uplink timing of the UE according to the uplink timing of the AP in service closest to the UE, and sending the timing adjustment signaling to the UE.

Obtaining the uplink timing of the AP in service closest to the UE may be: measuring time of arrival of a strong UE signal at each AP in service, determining the earliest time of arrival as the time of arrival of the strong UE signal at the AP in service closest to the UE, and obtaining the uplink timing of the AP in service closest to the UE. The uplink timing of the AP in service closest to the UE (namely, time of the UE sending an uplink signal) may be the uplink timing of a previous signal plus a timing adjustment value, where the uplink timing of the previous signal may be understood as the time of arrival of the strong UE signal at the AP in service closest to the UE, and the timing adjustment value may be equal to the expected time of arrival minus the arrival time of the previous signal.

Before the obtaining of the uplink timing of the AP in service closest to the UE, it is necessary to determine an AP in service of the UE. The method for determining an AP in service may be: The UE measures a signal quality of each AP except an anchor AP of the UE; after it is determined that a difference between a signal quality of a first AP except an anchor AP of the UE and a signal quality of the anchor AP is less than a first preset value (such as 6 dB), the first AP is added as an AP in service of the UE according to the information about the first AP reported by the UE. The anchor AP is an AP corresponding to a best-quality signal received by the UE. If the number of APs in service of the UE changes from one to many, the anchor AP is generally the single AP serving the UE. However, if the signal quality of the single AP deteriorates, the UE may determine a new anchor AP by measuring signal quality. If any change occurs in the APs in service of the UE, it is determined that the APs in service of the UE change. The signal quality may be represented by a Reference Signal Received Power (RSRP) value.

Before the obtaining of the uplink timing of the AP in service closest to the UE, it is necessary to determine an AP in service of the UE. The method for determining an AP in service may be: The network-side device measures the quality of uplink signals received by different APs from the UE; after it is determined that the difference between the signal quality at a second AP except the anchor AP and the signal quality at the anchor AP is less than a second preset value (such as 6 dB), the second AP is added as an AP in service of the UE. When any of the APs in service of the UE changes, it is determined that the APs in service of the UE change. The network-side device may determine which AP in service is an anchor AP according to the uplink signal sent by the UE to the AP, or may use an anchor AP selected by the UE as the anchor AP directly.

The foregoing timing adjustment signaling may be carried in signaling that is sent by the base station to notify the UE of a change of a coordination mode, or carried in other downlink control signaling.

After the timing adjustment signaling is sent to the UE, the UE may adjust the timing of the UE according to the timing adjustment signaling.

In the foregoing timing adjustment method, when the number of APs in service of the UE changes from one to many, or when an AP in service of the UE changes, the network-side device sends timing adjustment signaling to correct the uplink timing of the UE so as to enable the UE to adjust the timing, thereby shortening the delay of uplink signals received by the APs in service. By still applying a short uplink CP, the system relieves inter-symbol crosstalk and inter-subcarrier interference, and therefore reduces the system overhead and improves the utilization of system capacity.

When the coordination mode of the APs in service of the UE changes, the timing of the UE is adjusted according to the timing of the AP in service closest to the UE. As shown in FIG. 2, in such case, the uplink timing of UE2 is adjusted by using the timing of the AP in service closest to UE2 (AP2 in FIG. 2) as an uplink timing reference. Therefore, the signal of UE2 arrives at AP1 after the uplink timing reference, but arrives at AP2 right at the uplink timing reference. Similarly, the signal of UE1 arrives at AP1 right at the uplink timing reference, and arrives at AP2 after the uplink timing reference. That is, the time of arrival of the UE signal at the AP closest to the UE is near the uplink timing reference, but the time of arrival of the UE signal at the AP farther away from the UE is after the uplink timing reference.

After such adjustment is performed for different UEs, the spreading of arrival time of strong signals received by the APs from different UEs is relieved. Through emulation statistics, a short CP in the uplink direction is enough for meeting performance requirements of most UEs.

In the following embodiments, the signal quality is represented by an RSRP value.

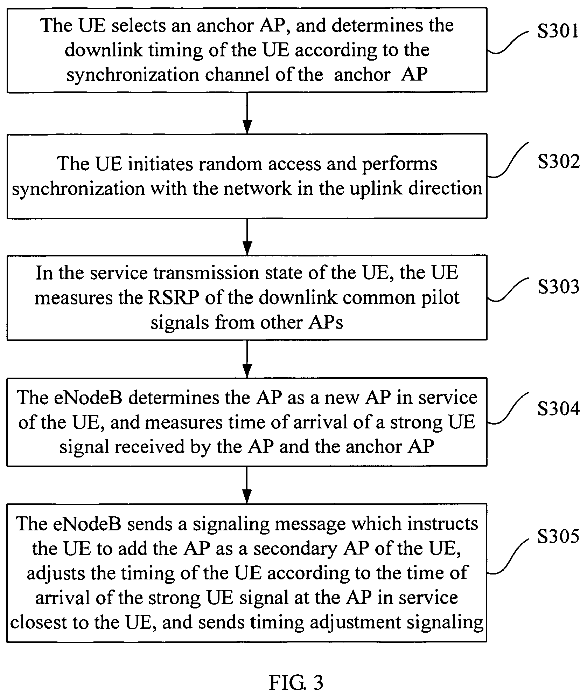

As shown in FIG. 3, another timing adjustment method in an embodiment of the present invention includes the following steps:
Step S301: The UE selects an anchor AP, and determines the downlink timing of the UE according to a synchronization channel of the anchor AP.
   In the initial cell synchronization, the UE determines the AP with a strongest signal as an anchor AP of the UE according to the detected signal strength of the synchronization channel, and determines the downlink timing of the UE according to the synchronization channel of the anchor AP.
Step S302: The UE initiates random access and performs synchronization with the network in the uplink direction. At this time, the UE selects an uplink random access channel corresponding to the anchor AP to transmit signals, and the anchor AP sends initial synchronization adjustment information t1 to the UE according to the uplink synchronization requirement of the cell of the anchor AP.
   Nevertheless, the anchor AP also sends the synchronization adjustment information t1 to other UEs to ensure uplink timing synchronization of all UEs that use the AP as the anchor AP.
Step S303: In service transmission state of the UE, the UE measures the RSRP of a downlink common pilot signal from other APs. When an AP meets a requirement (for example, when the difference between the RSRP value of an AP and that of the anchor AP is less than 6 dB), the UE reports the RSRP to the eNodeB.
Step S304: The eNodeB determines the AP that meets the requirement as a new AP in service of the UE, measures time of arrival of a strong UE signal at the AP and the anchor AP, and obtains the time of arrival of the strong UE signal at the AP in service closest to the UE.
Step S305: The eNodeB sends a signaling message which instructs the UE to add the AP as a secondary AP of the UE, adjusts the timing of the UE according to the time of arrival of the strong UE signal at the AP in service closest to the UE, sends timing adjustment signaling, and provides the CoMP service for the UE.

In the timing adjustment method above, the UE measures the RSRP from other APs. When an AP meets a specific requirement, the eNodeB adds the AP as a new AP in service according to the measurement result reported by the UE, and measures the time of arrival of a strong UE signal at the new AP in service and the anchor AP. The eNodeB determines the time of arrival of the strong UE signal at the AP in service closest to the UE according to the measured time of arrival of the strong UE signal, and adjusts the uplink timing of the UE by using the determined time of arrival for reference, thereby shortening the delay of the uplink signal received by the APs in service. By still applying a short uplink CP, the system relieves inter-symbol crosstalk and inter-subcarrier interference, and reduces the system overhead and improves the utilization of system capacity.

The network-side device mentioned in this embodiment may be an eNodeB. If an AP provides relevant functions of the eNodeB, the network-side device may also be the AP.

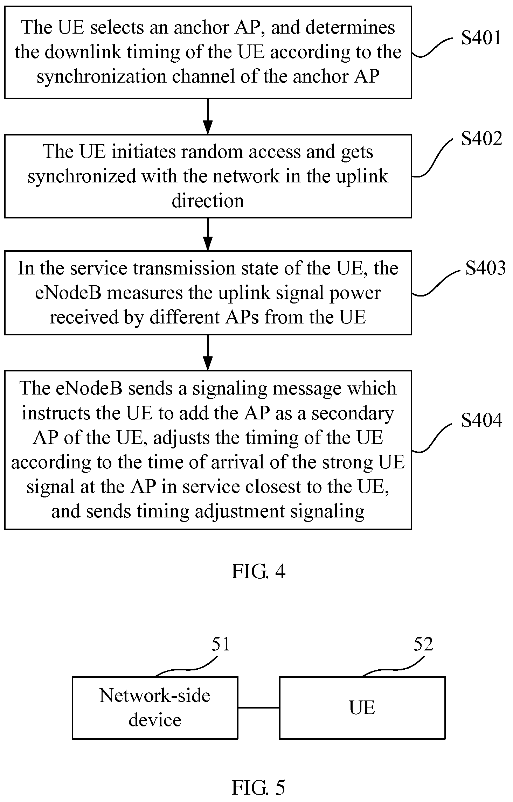

As shown in FIG. 4, another timing adjustment method in an embodiment of the present invention includes the following steps:
Step S401: The UE selects an anchor AP, and determines the downlink timing of the UE according to a synchronization channel of the anchor AP.
Step S402: The UE initiates random access and performs synchronization with the network in the uplink direction.
   Steps S401 and S402 are the same as steps S301 and S302 respectively.
Step S403: In service transmission state of the UE, the eNodeB measures the uplink signal power received by different APs from the UE. When finding that the difference between the received signal power by an AP and the received signal power by the anchor AP is less than 6 dB, the eNodeB adds the AP as a new AP in service of the UE, and measures the time of arrival of a strong UE signal at the AP and the anchor AP, so as to obtain the time of arrival of the strong UE signal at the AP in service closest to the UE.
Step S404: The eNodeB sends a signaling message which instructs the UE to add the AP as its secondary AP of the UE, adjusts the timing of the UE according to the time of arrival of the strong UE signal at the AP in service closest to the UE (for example, the AP which receives the signal from the UE first, among the anchor AP and secondary APs), sends timing adjustment signaling, and provides the CoMP service for the UE.

In the timing adjustment method above, the eNodeB measures the uplink signal power received by different APs from the UE. When an AP meets a specific requirement, the eNodeB adds this AP as a new AP in service of the UE, and measures the time of arrival of the strong UE signal at the new AP in service and the anchor AP. The eNodeB determines the time of arrival of the strong UE signal at the AP in service closest to the UE according to the measured time of arrival of the strong UE signal, and adjusts the uplink timing of the UE by using the determined time of arrival for reference, thereby shortening the delay of the uplink signal received by the APs in service. By still applying a short uplink CP, the system relieves inter-symbol crosstalk and inter-subcarrier interference, and therefore reduces the system overhead and improves the utilization of system capacity.

As shown in FIG. 5, a timing adjustment system in an embodiment of the present invention includes:
a network-side device 51, configured to judge whether an AP in service of a UE 52 changes, and send timing adjustment signaling to correct uplink timing of the UE 52 if an AP in service of the UE 52 changes, so as to enable the UE 52 to adjust the timing; and
the UE 52, configured to receive the timing adjustment signaling sent by the network-side device 51, and adjust the uplink timing of the UE 52 according to the timing adjustment signaling.

The network-side device 51 in this embodiment may be an eNodeB or an AP in service, and the eNodeB mentioned herein is an example of base stations.

In the timing adjustment system above, when an AP in service of the UE 52 changes, the network-side device 51 sends timing adjustment signaling to correct the uplink timing of the UE 52 so as to enable the UE 52 to adjust the timing, thereby shortening the delay of uplink signals received by the APs in service. By still applying a short uplink CP, the system relieves inter-symbol crosstalk and inter-subcarrier interference, and therefore reduces the system overhead and improves the utilization of system capacity.

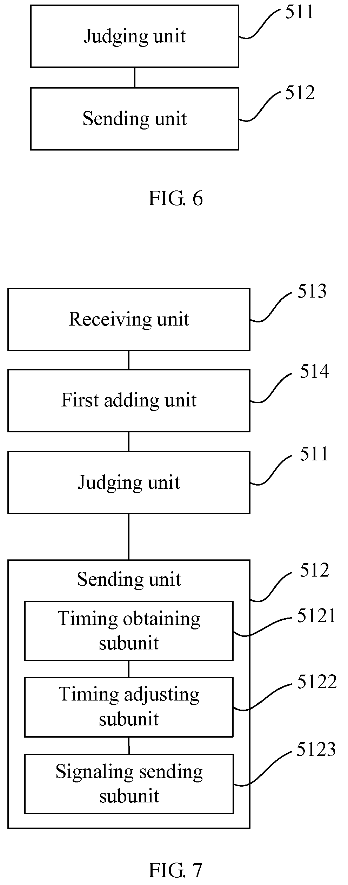

As shown in FIG. 6, a network-side device provided in an embodiment of the present invention includes:
a judging unit 511, configured to judge whether an AP in service of a UE 52 changes; and
a sending unit 512, configured to send timing adjustment signaling to correct uplink timing of the UE 52 if the judging unit 511 determines that an AP in service of the UE 52 changes, so as to enable the UE 52 to adjust the timing.

As shown in FIG. 7, the sending unit 512 may include:
a timing obtaining subunit 5121, configured to obtain the uplink timing of an AP in service closest to the UE 52;
a timing adjusting subunit 5122, configured to adjust the uplink timing of the UE 52 according to the uplink timing obtained by the timing obtaining subunit(5121); and
a signaling sending subunit 5123, configured to send the timing adjustment signaling to the UE 52.

The timing obtaining subunit 5121 is specifically configured to: measure time of arrival of a strong UE signal at each AP in service, determine the earliest time of arrival as the time of arrival of the strong UE signal at the AP in service closest to the UE 52, and obtain the uplink timing of the AP in service closest to the UE 52.

The network-side device 51 may further include:
a receiving unit 513, configured to receive information about a first AP, wherein the information about the first AP is reported by the UE after the UE measures that a difference between the signal quality of the first AP except an anchor AP of the UE and the signal quality of the anchor AP is less than a first preset value, and the anchor AP is the AP corresponding to a best-quality signal received by the UE 52; and
a first adding unit 514, configured to add the first AP as an AP in service of the UE according to the information about the first AP received by the receiving unit 513.

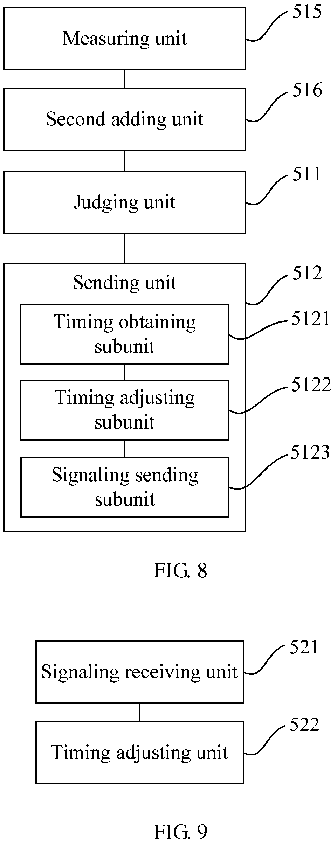

As shown in FIG. 8, the network-side device 51 may further include:
a measuring unit 515, configured to measure quality of signals received by different APs from the UE 52; and
a second adding unit 516, configured to add a second AP as an AP in service of the UE 52 after it is determined that, according to the measurement result of the measuring unit 515, a difference between the quality of a signal received by the second AP except the anchor AP of the UE and the quality of a signal received by the anchor AP of the UE 52 is less than a second preset value; and notify the judging unit 511 that an AP in service changes.

The network-side device 51 may be an eNodeB or an AP in service, and the eNodeB is an example of base stations.

In the network-side device above, after the judging unit 511 determines that an AP in service of the UE 52 changes, the sending unit 512 sends timing adjustment signaling to correct the uplink timing of the UE 52 so as to enable the UE 52 to adjust the timing, thereby shortening the delay of uplink signals received by the APs in service. By still applying a short uplink CP, the system relieves inter-symbol crosstalk and inter-subcarrier interference, and therefore reduces the system overhead and improves the utilization of system capacity.

As shown in FIG. 9, a UE provided in an embodiment of the present invention includes:
a signaling receiving unit 521, configured to receive timing adjustment signaling sent by a network-side device 51; and
a timing adjusting unit 522, configured to adjust uplink timing of the UE 52 according to the timing adjustment signaling received by the signaling receiving unit 521.

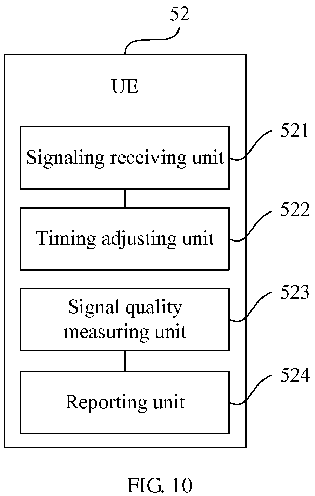

As shown in FIG. 10, the UE 52 may further include:
a signal quality measuring unit 523, configured to measure qualities of signals received from APs except an anchor AP of the UE 52; and
a reporting unit 524, configured to report information about a first AP to the network-side device 51 after the signal quality measuring unit 523 measures a difference between signal quality from the first AP except an anchor AP of the UE and the signal quality from the anchor AP is less than a first preset value.

In the UE above, the signaling receiving unit 521 receives timing adjustment signaling sent by the network-side device 51, and the timing adjusting unit 522 adjusts the uplink timing of the UE 52 according to the timing adjustment signaling received by the signaling receiving unit 521, thereby shortening the delay of uplink signals received by the APs in service. By still applying a short uplink CP, the system relieves inter-symbol crosstalk and inter-subcarrier interference, and therefore reduces the system overhead and improves the utilization of system capacity.

After reading the foregoing embodiments, those skilled in the art are clearly aware that the present invention may be implemented through hardware, or through software in addition to a necessary universal hardware platform. Based on such understanding, the technical solution under the present invention may be embodied in a software product. The software product may be stored in non-volatile storage media (such as a CD-ROM, a USB flash disk, or a mobile hard disk), and may include several instructions that enable a computer device (such as a personal computer, a server, or a network-side device) to perform the methods specified in any embodiment of the present invention.

It is understandable to those skilled in the art that the accompanying drawings are only schematic diagrams of the exemplary embodiments, and that the units or processes in the accompanying drawings are not mandatory for implementing the present invention.

It is understandable to those skilled in the art that the units in an apparatus provided in an embodiment of the present invention may be distributed into the apparatus described herein, or may be located in one or more apparatuses different from the apparatus described herein. The units may be integrated into one unit, or split into multiple subunits.

The serial number of each embodiment above is provided for ease of description only and does not represent the order of preference of the embodiment.

The above descriptions are merely exemplary embodiments of the present invention, but not intended to limit the scope of the present invention. The scope of the present invention is defined by the appended claims.

## Claims

1. A timing adjustment method, comprising:
judging (S101) whether an Access Point, AP, in service of a User Equipment, UE, changes; and
sending (S102) timing adjustment signaling to correct uplink timing of the UE if an AP in service of the UE changes, so as to enable the UE to adjust the timing;
wherein, the sending (S102) the timing adjustment signaling to correct the uplink timing of the UE comprises:
obtaining uplink timing of an AP in service closest to the UE; and
adjusting the uplink timing of the UE according to the uplink timing of the AP in service closest to the UE, and sending the timing adjustment signaling to the UE.

2. The method according to claim 1, wherein:
the judging (S101) whether an AP in service of the UE changes comprises: checking whether an AP in service is added for the UE and/or an AP in service is deleted for the UE.

3. The method according to claim 2, wherein the checking whether an AP in service is added for the UE comprises:
after the UE measures that a difference between a quality of a signal of a first AP except an anchor AP of the UE and a quality of a signal of the anchor AP is less than a first preset value, adding the first AP as an AP in service of the UE according to the information about the first AP reported by the UE, wherein the anchor AP is an AP corresponding to a best-quality signal received by the UE;
or, comprises:
measuring quality of signals received by different APs from the UE; and
after determining a difference between a quality of a signal received by an second AP except the anchor AP of the UE and the quality of a signal received by the anchor AP of the UE is less than a second preset value, adding the second AP as an AP in service of the UE, wherein the anchor AP is an AP corresponding to a best-quality signal received by the UE.

4. The method according to claim 1, wherein:
the obtaining the uplink timing of the AP in service closest to the UE comprises:
measuring time of arrival of a specific-strength UE signal received by each AP in service; and
determining the earliest time of arrival of the specific-strength UE signal as the time of arrival of the specific-strength UE signal at the AP in service closest to the UE, and obtaining the uplink timing of the AP in service closest to the UE.

5. The method according to any one of claims 1-4, wherein:
the timing adjustment signaling is carried in a downlink control signaling.

6. The method according to any one of claims 1-5, wherein:
before the sending (S102) the timing adjustment signaling to correct the uplink timing of the UE, the method further comprises:
determining that a change of the earliest time of arrival of a specific-strength UE signal at an AP in service exceeds a preset threshold.

7. A network-side device, comprising:
a judging unit (511), configured to judge whether an Access Point, AP, in service of a User Equipment, UE, changes; and
a sending unit (512), configured to send timing adjustment signaling to correct uplink timing of the UE if the judging unit (511) determines that an AP in service of the UE changes, so as to enable the UE to adjust the timing;
wherein, the sending unit (512) comprises:
a timing obtaining subunit (5121), configured to obtain uplink timing of an AP in service closest to the UE;
a timing adjusting subunit (5122), configured to adjust the uplink timing of the UE according to the uplink timing obtained by the timing obtaining subunit (5121); and
a signaling sending subunit (5123), configured to send the timing adjustment signaling to the UE.

8. The network-side device according to claim 7, wherein:
the timing obtaining subunit (5121) is specifically configured to measure time of arrival of a specific-strength UE signal at each AP in service, determine the earliest time of arrival as the time of arrival of the specific-strength UE signal at the AP in service closest to the UE, and obtain the uplink timing of the AP in service closest to the UE.

9. The network-side device according to any one of claims 7-8, further comprising:
a receiving unit (513), configured to receive information about a first AP, wherein the information about the first AP is reported by a UE after the UE measures that a difference between the signal quality of the first AP except an anchor AP of the UE and the signal quality of the anchor AP is less than a first preset value, and the anchor AP is an AP corresponding to a best-quality signal received by the UE; and
a first adding unit (514), configured to add the first AP as an AP in service of the UE according to the information about the first AP received by the receiving unit (513), and notify the judging unit (511) that an AP in service changes.

10. The network-side device according to any one of claims 7-9, further comprising:
a measuring unit (515), configured to measure quality of signals received by different APs from the UE; and
a second adding unit (516), configured to add a second AP as an AP in service of the UE after it is determined that, according to a measurement result of the measuring unit (515), a difference between the quality of a signal received by the second AP except an anchor AP of the UE and the quality of a signal received by the anchor AP of the UE is less than a second preset value; and notify the judging unit (511) that an AP in service changes.

11. The network-side device according to any one of claims 7-10, wherein the network-side device is a base station or an AP in service.

## Patentansprüche

1. Zeitanpassungsverfahren, umfassend:
Beurteilen (S101), ob sich ein Zugangspunkt, AP, im Dienst eines Teilnehmergerätes, UE, ändert; und
Senden (S102) von Zeitanpassungssignalisierung, um die Uplink-Zeiteinstellung des UE zu korrigieren, wenn sich ein AP im Dienst des UE ändert, so dass das UE befähigt wird, die Zeiteinstellung anzupassen;
wobei das Senden (S102) der Zeitanpassungssignalisierung, um die Uplink-Zeiteinstellung des UE zu korrigieren, umfasst:
Erhalten von Uplink-Zeiteinstellung eines AP im Dienst in nächster Nähe des UE; und
Anpassen der Uplink-Zeiteinstellung des UE gemäß der Uplink-Zeiteinstellung des AP im Dienst in nächster Nähe des UE, und Senden der Zeitanpassungssignalisierung an das UE.

2. Verfahren nach Anspruch 1, wobei:
das Beurteilen (S101), ob sich ein AP im Dienst des UE ändert, umfasst: Überprüfen, ob ein AP im Dienst für das UE hinzugefügt wird und/oder ein AP im Dienst für das UE gelöscht wird.

3. Verfahren nach Anspruch 2, wobei das Überprüfen, ob ein AP im Dienst für das UE hinzugefügt wird, umfasst:
nachdem das UE misst, dass ein Unterschied zwischen einer Qualität eines Signals eines ersten AP, außer einem Anker-AP der UE, und einer Qualität eines Signals des Anker-AP geringer als ein erster voreingestellter Wert ist, Hinzufügen des ersten AP als ein AP im Dienst des UE gemäß den Informationen über den ersten AP, der durch das UE gemeldet wurde, wobei der Anker-AP aus einem AP besteht, der einem Signal bester Qualität entspricht, welches das UE empfängt;
oder Folgendes umfasst:
Messen der Qualität von Signalen, die unterschiedliche APs von dem UE empfangen haben; und
nach dem Bestimmen eines Unterschiedes zwischen einer Qualität eines Signals, das ein zweiter AP, außer dem Anker-AP des UE, empfangen hat, und der Qualität eines Signals, das der Anker-AP des UE empfangen hat, geringer als ein zweiter voreingestellter Wert ist, Hinzufügen des zweiten AP als ein AP im Dienst des UE, wobei der Anker-AP aus einem AP besteht, der einem Signal bester Qualität entspricht, welches das UE empfangen hat.

4. Verfahren nach Anspruch 1, wobei:
das Erhalten der Uplink-Zeiteinstellung des AP im Dienst in nächster Nähe des UE umfasst:
Messen der Ankunftszeit eines UE-Signals spezifischer Stärke, das jeder AP im Dienst empfangen hat;
und
Bestimmen der frühesten Ankunftszeit des UE-Signals spezifischer Stärke als die Ankunftszeit des UE-Signals spezifischer Stärke an dem AP im Dienst in nächster Nähe des UE, und Erhalten der Uplink-Zeiteinstellung des AP im Dienst in nächster Nähe des UE.

5. Verfahren nach irgendeinem der Ansprüche 1 bis 4, wobei:
die Zeitanpassungssignalisierung in einer Downlink-Steuerungssignalisierung ausgeführt wird.

6. Verfahren nach irgendeinem der Ansprüche 1 bis 5, wobei:
vor dem Senden (S102) der Zeitanpassungssignalisierung, um die Uplink-Zeiteinstellung des UE zu korrigieren, das Verfahren des Weiteren Folgendes umfasst:
Bestimmen, dass eine Änderung der frühesten Ankunftszeit eines UE-Signals spezifischer Stärke an einem AP im Dienst einen voreingestellten Schwellenwert übersteigt.

7. Netzwerkseitige Vorrichtung, umfassend:
eine Beurteilungseinheit (511), die dazu ausgestaltet ist, zu beurteilen, ob sich ein Zugangspunkt, AP, im Dienst eines Teilnehmergerätes, UE, ändert; und
eine Sendeeinheit (512), die dazu ausgestaltet ist, Zeitanpassungssignalisierung zu senden, um die Uplink-Zeiteinstellung des UE zu korrigieren, wenn die Beurteilungseinheit (511) bestimmt, dass sich ein AP im Dienst des UE ändert, so dass das UE befähigt wird, die Zeiteinstellung anzupassen;
wobei die Sendeeinheit (512) Folgendes umfasst:
eine Zeiterhaltungs-Untereinheit (5121), die dazu ausgestaltet ist, Uplink-Zeiteinstellung eines AP im Dienst in nächster Nähe des UE zu erhalten;
eine Zeitanpassung-Untereinheit (5122), die dazu ausgestaltet ist, die Uplink-Zeiteinstellung des UE gemäß der Uplink-Zeiteinstellung anzupassen, die durch die Zeiterhaltungs-Untereinheit (5121) erhalten wird; und
eine Signalisierungssende-Untereinheit (5123), die dazu ausgestaltet ist, die Zeitanpassungssignalisierung an das UE zu senden.

8. Netzwerksseitige Vorrichtung nach Anspruch 7, wobei:
die Zeiterhaltungs-Untereinheit (5121) speziell dazu ausgestaltet ist, die Ankunftszeit eines UE-Signals spezifischer Stärke an jedem AP im Dienst zu messen, die früheste Ankunftszeit als die Ankunftszeit des UE-Signals spezifischer Stärke an dem AP im Dienst in nächster Nähe des UE zu bestimmen, und die Uplink-Zeiteinstellung des AP im Dienst in nächster Nähe des UE zu erhalten.

9. Netzwerkseitige Vorrichtung nach irgendeinem der Ansprüche 7 bis 8, des Weiteren Folgendes umfassend:
eine Empfangseinheit (513), die dazu ausgestaltet ist, Informationen über einen ersten AP zu empfangen, wobei die Informationen über den ersten AP durch ein UE gemeldet werden, nachdem das UE gemessen hat, dass ein Unterschied zwischen der Signalqualität des ersten AP, außer einem Anker-AP des UE, und der Signalqualität des Anker-AP geringer als ein erster voreingestellter Wert ist, und der Anker-AP aus einem AP besteht, der einem Signal bester Qualität entspricht, welches das UE empfangen hat; und
eine erste Addiereinheit (514), die dazu ausgestaltet ist, den ersten AP als einen AP im Dienst des UE gemäß den Informationen über den ersten AP hinzuzufügen, welche die Empfangseinheit (513) empfangen hat, und Benachrichtigen der Beurteilungseinheit (511), dass sich ein AP im Dienst ändert.

10. Netzwerkseitige Vorrichtung nach irgendeinem der Ansprüche 7 bis 9, des Weiteren Folgendes umfassend:
eine Messeinheit (515), die dazu ausgestaltet ist, Qualität von Signalen, die unterschiedliche APs von der UE empfangen haben, zu messen; und
eine zweite Hinzufügeeinheit (516), die dazu ausgestaltet ist, einen zweiten AP als einen AP im Dienst des UE hinzuzufügen, nachdem sie bestimmt hat, dass, gemäß einem Messergebnis der Messeinheit (515), ein Unterschied zwischen der Qualität eines Signals, das der zweite AP, außer einem Anker-AP der UE, empfangen hat, und der Qualität eines Signals, das der Anker-AP der UE empfangen hat, geringer als ein zweiter voreingestellter Wert ist; und Benachrichtigen der Beurteilungseinheit (511), dass sich ein AP im Dienst ändert.

11. Netzwerkseitige Vorrichtung nach irgendeinem der Ansprüche 7 bis 10, wobei die netzwerkseitige Vorrichtung aus einer Basisstation oder einem AP im Dienst besteht.

## Revendications

1. Procédé de réglage de base de temps, comprenant :
estimation (S101) si un point d'accès, AP, en service d'un équipement d'utilisateur, UE, change ; et
envoi (S102) d'une signalisation de réglage de base de temps pour corriger la base de temps de liaison montante de l'UE si un AP en service de l'UE change, afin de permettre à l'UE de régler la base de temps ;
l'envoi (S102) de la signalisation de réglage de base de temps pour corriger la base de temps de liaison montante de l'UE comprenant :
obtention de la base de temps de liaison montante d'un AP en service le plus proche de l'UE ; et
réglage de la base de temps de liaison montante de l'UE conformément à la base de temps de liaison montante de l'AP en service le plus proche de l'UE, et envoi de la signalisation de réglage de base de temps à l'UE.

2. Procédé selon la revendication 1, selon lequel :
l'estimation (S101) si un AP en service de l'UE change comprend : contrôle si un AP en service est ajouté pour l'UE et/ou un AP en service est supprimé pour l'UE.

3. Procédé selon la revendication 2, selon lequel le contrôle si un AP en service est ajouté pour l'UE comprend :
après que l'UE mesure qu'une différence entre une qualité d'un signal d'un premier AP, à l'exception d'un AP d'ancrage de l'UE, et une qualité d'un signal de l'AP d'ancrage est inférieure à une première valeur prédéfinie, ajout du premier AP en tant qu'AP en service de l'UE conformément aux informations à propos du premier AP signalées par l'UE, l'AP d'ancrage étant un AP correspondant à un signal de meilleure qualité reçu par l'UE ;
ou comprend :
mesure de la qualité des signaux reçus par différents AP de l'UE ; et
après avoir déterminé qu'une différence entre une qualité d'un signal reçu par un deuxième AP, à l'exception de l'AP d'ancrage de l'UE, et la qualité d'un signal reçu par l'AP d'ancrage est inférieure à une deuxième valeur prédéfinie, ajout du deuxième AP en tant qu'AP en service de l'UE, l'AP d'ancrage étant un AP correspondant à un signal de meilleure qualité reçu par l'UE.

4. Procédé selon la revendication 1, selon lequel :
l'obtention de la base de temps de liaison montante de l'AP en service le plus proche de l'UE comprend :
mesure de l'instant d'arrivée d'un signal d'UE ayant une intensité spécifique reçu par chaque AP en service ; et
détermination de l'instant d'arrivée le plus tôt du signal d'UE ayant une intensité spécifique comme étant l'instant d'arrivée du signal d'UE ayant une intensité spécifique à l'AP en service le plus proche de l'UE, et obtention de la base de temps de liaison montante de l'AP en service le plus proche de l'UE.

5. Procédé selon l'une quelconque des revendications 1 à 4, selon lequel :
la signalisation de réglage de base de temps est transportée dans une signalisation de commande de liaison descendante.

6. Procédé selon l'une quelconque des revendications 1 à 5, selon lequel :
avant l'envoi (S102) de la signalisation de réglage de base de temps pour corriger la base de temps de liaison montante de l'UE, le procédé comprend en outre :
détermination qu'un changement de l'instant d'arrivée le plus tôt du signal d'UE ayant une intensité spécifique à un AP en service dépasse un seuil prédéfini.

7. Dispositif côté réseau, comprenant :
une unité d'estimation (511) configurée pour estimer si un point d'accès, AP, en service d'un équipement d'utilisateur, UE, change ; et
une unité d'envoi (512) configurée pour envoyer une signalisation de réglage de base de temps pour corriger la base de temps de liaison montante de l'UE si l'unité d'estimation (511) déterminer qu'un AP en service de l'UE change, afin de permettre à l'UE de régler la base de temps ;
l'unité d'envoi (512) comprenant :
une sous-unité d'obtention de base de temps (5121), configurée pour obtenir la base de temps de liaison montante d'un AP en service le plus proche de l'UE ;
une sous-unité de réglage de la base de temps (5122), configurée pour régler la base de temps de liaison montante de l'UE conformément à la base de temps de liaison montante obtenue par la sous-unité d'obtention de base de temps (5121) ; et
une sous-unité d'envoi de signalisation (5123), configurée pour envoyer la signalisation de réglage de base de temps à l'UE.

8. Dispositif côté réseau selon la revendication 7, avec lequel :
la sous-unité d'obtention de base de temps (5121) est configurée spécifiquement pour mesurer l'instant d'arrivée d'un signal d'UE ayant une intensité spécifique à chaque AP en service, déterminer l'instant d'arrivée le plus tôt comme étant l'instant d'arrivée du signal d'UE ayant une intensité spécifique à l'AP en service le plus proche de l'UE, et obtenir la base de temps de liaison montante de l'AP en service le plus proche de l'UE.

9. Dispositif côté réseau selon l'une quelconque des revendications 7 et 8, comprenant en outre :
une unité de réception (513), configurée pour recevoir des informations à propos d'un premier AP, les informations à propos du premier AP étant signalées par un UE après qu'un UE mesure qu'une différence entre la qualité du signal du premier AP, à l'exception d'un AP d'ancrage de l'UE, et la qualité du signal de l'AP d'ancrage est inférieure à une première valeur prédéfinie, et l'AP d'ancrage est un AP correspondant à un signal de meilleure qualité reçu par l'UE ; et
une première unité d'ajout (514), configurée pour ajouter le premier AP en tant qu'AP en service de l'UE conformément aux informations à propos du premier AP reçues par l'unité de réception (513), et notifier l'unité d'estimation (511) qu'un AP en service change.

10. Dispositif côté réseau selon l'une quelconque des revendications 7 à 9, comprenant en outre :
une unité de mesure (515), configurée pour mesurer la qualité des signaux reçus par différents AP de l'UE ; et
une deuxième unité d'ajout (516), configurée pour ajouter un deuxième AP en tant qu'AP en service de l'UE après qu'il ait été déterminé que, conformément au résultat d'une mesure de l'unité de mesure (515), une différence entre la qualité d'un signal reçu par le deuxième AP, à l'exception d'un AP d'ancrage de l'UE, et la qualité d'un signal reçu par l'AP d'ancrage de l'UE est inférieure à une deuxième valeur prédéfinie ; et notifier l'unité d'estimation (511) qu'un AP en service change.

11. Dispositif côté réseau selon l'une quelconque des revendications 7 à 10, avec lequel le dispositif côté réseau est une station de base ou un AP en service.
